Europäisches Patentamt

European Patent Office

Office européen des brevets

(19)

(11) **EP 1 387 231 A1**

(12) **EUROPEAN PATENT APPLICATION**
published in accordance with Art. 158(3) EPC

(43) Date of publication:
**04.02.2004 Bulletin 2004/06**

(51) Int Cl.7: **G05B 19/418**

(21) Application number: **02724693.3**

(86) International application number:
**PCT/JP2002/004417**

(22) Date of filing: **02.05.2002**

(87) International publication number:
**WO 2002/091094 (14.11.2002 Gazette 2002/46)**

(84) Designated Contracting States:
**AT BE CH CY DE DK ES FI FR GB GR IE IT LI LU MC NL PT SE TR**

(30) Priority: **08.05.2001 JP 2001013781**

(71) Applicant: **Daikin Industries, Ltd.**
**Osaka-shi, Osaka 530-8323 (JP)**

(72) Inventors:
• **TABUCHI, Katsuyuki, c/o Daikin Industries, Ltd.**
**Sakai-shi, Osaka 591-8511 (JP)**
• **YAMADA, Shigeki, c/o Daikin Industries, Ltd.**
**Kusatsu-s hi, Shiga 525-0044 (JP)**

(74) Representative: **Goddar, Heinz J., Dr.**
**FORRESTER & BOEHMERT**
**Pettenkoferstrasse 20-22**
**80336 München (DE)**

(54) **PARTS PROCUREMENT METHOD AND APPARATUS**

(57)    A method for procuring parts includes the steps of determining a planned production quantity of a product to be produced during a predetermined time period; preparing an order form, the order form comprising an order quantity obtained by calculating, according to the planned production quantity, a required parts quantity required during the predetermined time period and calculating, according to the required parts quantity, a parts quantity to be delivered during the predetermined time period, and sending it to a supplier; determining an actual production quantity of the product to be produced during a predetermined time period taking a current production progress' status into consideration; and issuing a delivery instruction form comprising a delivery quantity being a parts quantity to be delivered during the predetermined time period, the parts quantity calculated according to the actual production quantity, and sending the delivery instruction form to the supplier.

Fig. 3

**Description**

Technical Field

The present invention relates to a method for parts procurement in which orders for parts required for producing products in a production line are placed with suppliers to carry out delivery instructions, a program for implementing such a method for parts procurement in a computer, a computer readable storage media storing the program, and an apparatus for parts procurement.

Background Art

Methods for ordering parts required for producing goods in production lines or the like are roughly classified into two types, a scheduled order system, in which orders are placed according to production plans, and a replenish-to-order system, in which orders are placed so that only the parts that have been used are replenished.

In a scheduled order system, according to a production plan formulated in advance, parts necessary for achieving the production plan are ordered from suppliers. When the facilities in a production line are in good order, products are manufactured in accordance with the formulated production plan using the delivered parts.

In such cases that an abnormal state occurs in a production line and the production activity is temporarily suspended, however, the inventory of the parts delivered according to a formulated production plan increases and an excessive inventory results. Even after the production activity is resumed, parts deliveries according to the formulated production plan continue, making it difficult to dissipate the excessive inventory.

In a replenish-to-order system, parts orders are placed only by the number of the parts that have been used in the production. This is also referred to as a signaling system or a "kanban" system, and for example, an identification plate called "kanban" is attached to a pallet on which parts are placed and the kanban returns to the department that controls the inventory after the parts have been used. If the number of kanbans that are not linked with parts exceeds a predetermined number, it is determined that a replenishment time is reached, and an order is placed with the supplier.

In the replenish-to-order system, it is difficult to alter order quantities in such cases that production quantities in production lines fluctuate, and in some circumstances, even minimum inventory quantities required for the production are difficult to maintain. Therefore, the replenish-to-order system is not appropriate for such production lines that production plans are changed, and in particular, the system is difficult to apply for such production lines that production plans are changed at short periodic cycles.

Accordingly, it is an object of the present invention to maintain inventory quantities of the parts used for production at an appropriate level, to eliminate excessive inventories, and to maintain minimum inventory quantities even in production lines such that production plans are changed at short periodic cycles.

Disclosure of Invention

According to claim 1 of the invention, a method for procuring parts is provided, comprising: a step of determining a planned production quantity of a product produced during a predetermined time period; a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier; a step of determining an actual production quantity of the product produced during the predetermined time period taking a current production progress status into consideration; and a step of issuing a delivery instruction form comprising a delivery quantity obtained by calculating from the actual production quantity a parts quantity to be delivered during the predetermined time period, and sending the delivery instruction form to the supplier.

With this configuration, the order quantity calculated according to the planned production quantity during a predetermined time period is notified to a supplier with an order form, and therefore, the supplier side can prepare parts delivery according to the planned production quantity during the predetermined time period. Moreover, an actual production quantity is determined according to the actual progress status of the production line, and according to this, a delivery instruction form is prepared, thus preventing stockouts as well as overstocks of delivered parts. Furthermore, the cycles at which production plans are reviewed can be changed and flexible production plans in a production line are possible, and even if production plans are changed at short periodic cycles, minimum inventory quantities are ensured by issuing delivery instruction forms according to actual production quantities.

According to claim 2 of the invention, the method for procuring parts as set forth in claim 1 further comprises, when preparing the order form, a step of calculating an order quantity by allocating an excessive parts quantity in an inventory from the required parts quantity calculated from the planned production quantity.

With this configuration, an excessive inventory is prevented by preparing an order form taking an excessive parts quantity into consideration.

According to claim 3 of the invention, the method for procuring parts as set forth in claim 1 or 2, further comprises a step of adjusting the order quantity in the order form according to such factors as production lots of parts, packaging styles of parts, and delivery cycles.

When calculated order quantities may cause fractions in production due to production lots of parts or fractions in delivery due to delivery package styles or delivery cycles, coordination is performed to eliminate such fractions, and production efficiency and delivery efficiency are thereby increased.

According to claim 4 of the invention, in the method for procuring parts as set forth in any one of claims 1 to 3, a representative delivery site representing a plurality of delivery sites is set and the order form is prepared designating the representative delivery site.

Setting a representative delivery site when issuing an order form facilitates order coordination during the predetermined time period even if the final delivery sites have not been determined or final delivery sites are not identical.

According to claim 5 of the invention, the method for procuring parts as set forth in claim 2 further comprises, when preparing the order form, a step of reflecting the excessive parts quantity allocated from the inventory on the delivery instruction form.

With this configuration, when an excessive parts allocation is carried out, a delivery instruction form in which the allocation process is reflected is prepared, and therefore, no excessive delivery instructions are given and appropriate inventory quantities are maintained. Moreover, by preparing an excessive parts inputting instruction form for carrying out a production using excessive parts, the excessive inventory in the production site is eliminated.

According to claim 6 of the invention, the method for procuring parts as set forth in any one of claims 1 to 5 further comprises a step of adjusting the delivery quantity in the delivery instruction form according to such factors as packaging styles of parts and delivery cycles.

With this configuration, when a calculated delivery quantity causes fractions in the delivery, the fractions are rounded up for the parts that are usable later, so that the efficiency in delivery is improved.

According to claim 7 of the invention, in the method for procuring parts as set forth in claim 6, the delivery quantity is adjusted for each delivery site and delivery instruction forms designating corresponding delivery sites are issued.

With this configuration, a delivery instruction form is issued designating a delivery site to where the parts are actually delivered, and therefore, delivery coordination can be performed for each delivery site, flexible changes, such as production line shifts after the order become possible, and the distribution efficiency within the plant can be improved.

According to claim 8 of the invention, the method for procuring parts as set forth in claim 7 further comprises: a step of leveling the actual production quantity on a time basis; and a step of calculating a time-based required parts quantity required on a time-by-time basis from the leveled actual production quantity.

With this configuration, a production plan on a time-by-time basis can be formulated, and the timing of the issuance of the delivery instruction form can be determined according to the production plan on a time-by-time basis.

According to claim 9 of the invention, in the method for procuring parts as set forth in claim 8, a precedent delivery time is determined from the time-based required parts quantity and a delivery cycle, and the delivery quantity in the delivery instruction form and the timing of issuance of the delivery instruction form are adjusted based on the precedent delivery time.

With this configuration, the inventory quantity of the parts used in a production line can be appropriately maintained on a time-by-time basis.

According to claim 10 of the invention, the method for procuring parts as set forth in any one of claims 1 to 9 further comprises a step of controlling the delivery quantity in the delivery instruction form so that the delivery quantity in the delivery instruction form does not precede the order quantity in the order form.

Suppliers prepare for parts procurement based on the order quantities stated on order forms, and therefore, when a delivery instruction form specifying a delivery quantity exceeding the order quantity stated on an order form is issued, there is a risk that parts are not supplied within the delivery time specified in the delivery instruction form. If this is the case, the production activities may have to be suspended due to a shortage of parts supply. In view of this, by controlling the delivery quantity in the delivery instruction form, such a situation is prevented and the efficiency of the production activities is improved.

According to claim 11 of the invention, the method for procuring parts as set forth in any one of claims 1 to 10 further comprises: a steps of acquiring an extraordinary parts demand data that is not included in the planned production quantity; and based on the extraordinary parts demand data, a steps of issuing a delivery instruction form for an extraordinary order and sending the delivery instruction form to a supplier.

With this configuration, when a demand for parts that is not accounted for in the planned production quantity arises, a delivery instruction form can be issued based on such extraordinary parts demand data letting the supplier perform a delivery.

According to claim 12 of the invention, a computer-executable program for executing a parts procurement method for procuring parts required for producing a product is provided, the method comprising: a step of determining a planned production quantity of a product produced during a predetermined time period; a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier; a step of determining an actual production quantity of the product produced during the predetermined time period taking a current production progress status into consideration; and a step of issuing a delivery instruction form comprising a delivery quantity obtained by calculating from the actual production quantity a parts quantity to be delivered during the predetermined time period, and sending the delivery instruction form to the supplier.

With this configuration, the order quantity calculated according to the planned production quantity during a predetermined time period is notified to a supplier with an order form, and therefore, the supplier side can prepare parts delivery according to the planned production quantity during the predetermined time period. Moreover, an actual production quantity is determined according to the actual progress status of the production 'line, and according to this, a delivery instruction form is prepared, thus preventing stockouts as well as overstocks of delivered parts. Furthermore, the cycles at which production plans are reviewed can be changed and flexible production plans in a production line are possible, and even if production plans are changed at short periodic cycles, minimum inventory quantities are ensured by issuing delivery instruction forms according to actual production quantities.

According to claim 13 of the invention, a computer-executable program for executing a parts procurement method for procuring parts required for producing a product is provided, the method comprising: a step of determining a planned production quantity of a product produced during a predetermined time period; a step of calculating a required parts quantity required during the predetermined time period from the planned production quantity; a step of calculating an order quantity by allocating an excessive parts quantity in an inventory from the required parts quantity calculated from the planned production quantity; a step of preparing an order form according the order quantity and sending it to a supplier; a step of determining an actual production quantity of the product produced during the predetermined time period taking a current production progress status into consideration; and a step of issuing a delivery instruction form comprising a delivery quantity obtained by calculating from the actual production quantity a parts quantity to be delivered during the predetermined time period, and sending the delivery instruction form to the supplier.

With this configuration, an excessive inventory is prevented by preparing an order form taking an excessive parts quantity into consideration.

According to claim 14 of the invention, a computer-executable program for executing a parts procurement method for procuring parts required for producing a product is provided, the method comprising: a step of determining a planned production quantity of a product produced during a predetermined time period; a step of calculating a required parts quantity required during the predetermined time period from the planned production quantity; a step of calculating an order quantity by adjusting the required parts quantity according to such factors as production lots of parts, packaging styles of parts, and delivery cycles; a step of preparing an order form according the order quantity and sending it to a supplier; a step of determining an actual production quantity of the product produced during the predetermined time period taking a current production progress status into consideration; and a step of issuing a delivery instruction form comprising a delivery quantity obtained by calculating from the actual production quantity a parts quantity to be delivered during the predetermined time period, and sending the delivery instruction form to the supplier.

With this configuration, when calculated order quantities may cause fractions in production due to production lots of parts or fractions in delivery due to delivery package styles or delivery cycles, coordination is performed to eliminate such fractions, and production efficiency and delivery efficiency are thereby increased.

According to claim 15 of the invention, there is provided a computer-executable program for executing a parts procurement method as set forth in claim 14, wherein a representative delivery site representing a plurality of delivery sites is set and the order form is prepared designating the representative delivery site.

With this configuration, when a representative delivery site when issuing an order form facilitates order coordination during the predetermined time period even if the final delivery sites have not been determined or final delivery sites are not identical.

According to claim 16 of the invention, a computer-executable program for executing a parts procurement method for procuring parts required for producing a product is provided, the method comprising: a step of determining a planned production quantity of a product produced during a predetermined time period; a step of calculating a required parts quantity required during the predetermined time period from the planned production quantity; a step of calculating an order quantity by allocating an excessive parts quantity in an inventory from the required parts quantity calculated from the planned production quantity; a step of preparing an order form according the order quantity and sending it to a supplier; a step of determining an actual production quantity of the product produced during the predetermined time period taking a current production progress status into consideration; a step of calculating from the actual production quantity a parts quantity delivered during the predetermined time period; a step of determining a delivery quantity by, when preparing the order form, reflecting the excessive parts quantity allocated from the inventory in the parts quantity calculated from the actual production quantity; and a step of issuing a delivery instruction form according to the delivery quantity and sending the delivery instruction form to the supplier.

With this configuration, when an excessive parts allocation is carried out, a delivery instruction form in which the allocation process is reflected is prepared, and therefore, no excessive delivery instructions are given and appropriate inventory quantities are maintained. Moreover, by preparing an excessive parts inputting instruction form for carrying out a production using excessive parts, the excessive inventory in the production site is eliminated.

According to claim 17 of the invention, a computer-executable program for executing a parts procurement method for procuring parts required for producing a product is provided, the method comprising: a step of determining a planned production quantity of a product produced during a predetermined time period; a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier; a step of determining an actual production quantity of the product produced during the predetermined time period taking a current production progress status into consideration; a step of calculating from the actual production quantity a parts quantity delivered during the predetermined time period; a step of determining a delivery quantity by subjecting the parts quantity calculated from the actual production quantity to a delivery coordination according to such factors as packaging styles of parts and delivery cycles; and a step of issuing a delivery instruction form according to the delivery quantity and sending the delivery instruction form to the supplier.

With this configuration, when a calculated delivery quantity causes fractions in the delivery, the fractions are rounded up for the parts that are usable later, so that the efficiency in delivery is improved.

According to claim 18 of the invention, a computer-executable program for executing a parts procurement method for procuring parts required for producing a product is provided, the method comprising: a step of determining a planned production quantity of a product produced during a predetermined time period; a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier; a step of determining an actual production quantity of the product produced during the predetermined time period taking a current production progress status into consideration; a step of calculating from the actual production quantity a parts quantity delivered during the predetermined time period; and a step of issuing a delivery instruction form designating a corresponding delivery site by subjecting the parts quantity calculated from the actual production quantity to a delivery coordination for each delivery site to calculate a delivery quantity, and sending the delivery instruction form to the supplier.

With this configuration, a delivery instruction form is issued designating a delivery site to where the parts are actually delivered, and therefore, delivery coordination can be performed for each delivery site, flexible changes, such as production line shifts after the order become possible, and the distribution efficiency within the plant can be improved.

According to claim 19 of the invention, a computer-executable program for executing a parts procurement method for procuring parts required for producing a product is provided, the method comprises: a step of determining a planned production quantity of a product produced during a predetermined time period; a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier; a step of determining an actual production quantity of the product produced during the predetermined time period taking a current production progress status into consideration; a step of leveling the actual production quantity on a time basis; a step of calculating a time-based required parts quantity required on a time-by-time basis from the leveled actual production quantity; and a step of issuing a delivery instruction form comprising a delivery quantity obtained by calculating from the actual production quantity a parts quantity to be delivered during the predetermined time period, and sending the delivery instruction form to the supplier.

With this configuration, a production plan on a time-by-time basis can be formulated, and the timing of the issuance of the delivery instruction form can be determined according to the production plan on a time-by-time basis.

According to claim 20 of the invention, there is provided a computer-executable program for executing a parts procurement method as set forth in claim 19, wherein a precedent delivery time is determined from the time-based required parts quantity and a delivery cycle, and the delivery quantity in the delivery instruction form and the timing of issuance of the delivery instruction form are adjusted based on the precedent delivery time.

With this configuration, the inventory quantity of the parts used in a production line can be appropriately maintained on a time-by-time basis.

According to claim 21 of the invention, a computer-executable program for executing a parts procurement method for procuring parts required for producing a product is provided, the method comprising: a step of determining a planned production quantity of a product produced during a predetermined time period; a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier; a step of determining an actual production quantity of the product produced during the predetermined time period taking a current production progress status into consideration; a step of calculating from the actual production quantity a parts quantity delivered during the predetermined time period; and a step of issuing a delivery instruction form comprising a delivery quantity determined from the parts quantity calculated according to the actual production quantity so that the delivery quantity is controlled so as not to precede the order quantity in the order form, and sending the delivery instruction form to the supplier.

With this configuration, by controlling a delivery quantity on a delivery instruction form prevents, such situations that production activities have to be suspended due to a shortage of parts supply are prevented, appropriate inventory quantities are maintained, and the efficiency of the production activities is improved.

According to claim 22 of the invention, a computer-executable program for executing a parts procurement method for procuring parts required for producing a product is provided, the method comprising: a step of determining a planned production quantity of a product produced during a predetermined time period; a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier; a step of determining an actual production quantity of the product produced during the predetermined time period taking a current production progress status into consideration; a step of issuing a delivery instruction form comprising a delivery quantity obtained by calculating from the actual production quantity a parts quantity to be delivered during the predetermined time period, and sending the delivery instruction form to the supplier; a step of acquiring an extraordinary parts demand data that is not included in the planned production quantity; and a step of, based on the extraordinary parts demand data, issuing a delivery instruction form for an extraordinary order and sending the delivery instruction form to a supplier.

With this configuration, when a demand for parts that is not accounted for in the planned production quantity arises, a delivery instruction form can be issued based on such extraordinary parts demand data letting the supplier perform a delivery.

According to claim 23 of the invention, there is provided a computer-readable storage medium, storing a program as set forth in any one of claims 12 to 22.

With this configuration, each of the computer-executable programs for executing a parts procurement method can be made into a package and be distributed.

According to claim 24 of the invention, a parts procurement apparatus is provided, comprising: a long-term production planning means for determining a planned production quantity of a product produced during a predetermined time period; an order form issuing means for preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier; a short-term production planning means for determining an actual production quantity of the product produced during the predetermined time period taking a current production progress status into consideration; and a delivery instruction form issuing means for issuing a delivery instruction form comprising a delivery quantity obtained by calculating from the actual production quantity a parts quantity to be delivered during the predetermined time period, and sending the delivery instruction form to the supplier.

With this configuration, the order quantity calculated according to the planned production quantity during a predetermined time period is notified to a supplier with an order form, and therefore, the supplier side can prepare parts delivery according to the planned production quantity during the predetermined time period. Moreover, an actual production quantity is determined according to the actual progress status of the production line, and according to this, a delivery instruction form is prepared, thus preventing stockouts as well as overstocks of delivered parts. Furthermore, the cycles at which production plans are reviewed can be changed and flexible production plans in a production line are possible, and even if production plans are changed at short periodic cycles, minimum inventory quantities are ensured by issuing delivery instruction forms according to actual production quantities.

According to claim 25 of the invention, the parts procurement apparatus as set forth in claim 24 further comprises an excessive parts allocation means for calculating an order quantity by allocating an excessive parts quantity in an inventory from the required parts quantity calculated from the planned production quantity.

With this configuration, an excessive inventory is prevented by preparing an order form taking an excessive parts quantity into consideration.

According to claim 26 of the invention, the parts procurement apparatus as set forth in claim 25 further comprises an order delivery coordinating means for adjusting the order quantity in the order form according to such factors as production lots of parts, packaging styles of parts, and delivery cycles.

With this configuration, when calculated order quantities may cause fractions in production due to production lots of parts or fractions in delivery due to delivery package styles or delivery cycles, coordination is performed to eliminate such fractions, and production efficiency and delivery efficiency are thereby increased.

According to claim 27 of the invention, in the parts procurement apparatus as set forth in any one of claims 24 to 26, a representative delivery site representing a plurality of delivery sites is set and the order form is prepared designating the representative delivery site.

With this configuration, when a representative delivery site when issuing an order form facilitates order coordination during the predetermined time period even if the final delivery sites have not been determined or final delivery sites are not identical.

According to claim 28 of the invention, the parts procurement apparatus as set forth in claim 25 further comprises an excessive parts allocation reflecting means for reflecting the excessive parts quantity allocated from the inventory on the delivery instruction form when preparing the order form.

With this configuration, when an excessive parts allocation is carried out, a delivery instruction form in which the allocation process is reflected is prepared, and therefore, no excessive delivery instructions are given and appropriate inventory quantities are maintained. Moreover, by preparing an excessive parts inputting instruction form for carrying out a production using excessive parts, the excessive inventory in the production site is eliminated.

According to claim 29 of the invention, the parts procurement apparatus as set forth in any one of claims 24 to 28 further comprises a delivery coordinating means for adjusting the order quantity in the order form according to such factors as packaging styles of parts and delivery cycles.

With this configuration, when a calculated delivery quantity causes fractions in the delivery, the fractions are rounded up for the parts that are usable later, so that the efficiency in delivery is improved.

According to claim 30 of the invention, in the parts procurement apparatus as set forth in claim 29, the delivery quantity is adjusted for each delivery site and delivery instruction forms designating corresponding delivery sites are issued.

With this configuration, a delivery instruction form is issued designating a delivery site to where the parts are actually delivered, and therefore, delivery coordination can be performed for each delivery site, flexible changes, such as production line shifts after the order become possible, and the distribution efficiency within the plant can be improved.

According to claim 31 of the invention, the parts procurement apparatus as set forth in claim 30, further comprises a time-based leveling means for leveling the actual production quantity on a time basis; and a required parts quantity calculating means for calculating a time-based required parts quantity required on a time-by-time basis from the leveled actual production quantity.

With this configuration, a production plan on a time-by-time basis can be formulated, and the timing of the issuance of the delivery instruction form can be determined according to the production plan on a time-by-time basis.

According to claim 32 of the invention, in the parts procurement apparatus as set forth in claim 31, a precedent delivery time is determined from the time-based required parts quantity and a delivery cycle, and the delivery quantity in the delivery instruction form and the timing of issuance of the delivery instruction form are adjusted based on the precedent delivery time.

With this configuration, the inventory quantity of the parts used in a production line can be appropriately maintained on a time-by-time basis.

According to claim 33 of the invention, the parts procurement apparatus as set forth in any one of claims 24 to 32, further comprises an outstanding order determining means for controlling the delivery quantity in the delivery instruction form so that the delivery quantity in the delivery instruction form does not precede the order quantity in the order form.

With this configuration, by controlling a delivery quantity in a delivery instruction form, such a situation is avoided that production activities have to be suspended by a shortage of parts supply, and the efficiency of the production activities is improved.

According to claim 34 of the invention, the parts procurement apparatus as set forth in any one of claims 24 to 33 further comprises: an extraordinary parts demand data acquiring means for acquiring an extraordinary parts demand data that is not included in the planned production quantity; and an extraordinary parts ordering means for, based on the extraordinary parts demand data, issuing a delivery instruction form for an extraordinary order and sending the delivery instruction form to a supplier.

With this configuration, when a demand for parts that is not accounted for in the planned production quantity arises, a delivery instruction form can be issued based on such extraordinary parts demand data letting the supplier perform a delivery.

Brief Description of Drawings

Fig. 1 is a control block diagram of a parts procurement apparatus that adopts one embodiment of the present invention;
Fig. 2 schematically shows a control flow;
Fig. 3 is a control flow chart according to an embodiment;
Fig. 4 schematically shows an example of a delivery instruction method;
Fig. 5 schematically shows an example of a delivery instruction method;
Fig. 6 schematically shows an example of a delivery instruction method;
Fig. 7 schematically shows an example of a delivery instruction method;
Fig. 8 schematically shows an example of a delivery instruction method;
Fig. 9 schematically shows an example of a delivery instruction method; and
Fig. 10 schematically shows an example of a delivery instruction method.

Modes for Carrying Out the Invention

*Outline of the Configuration*

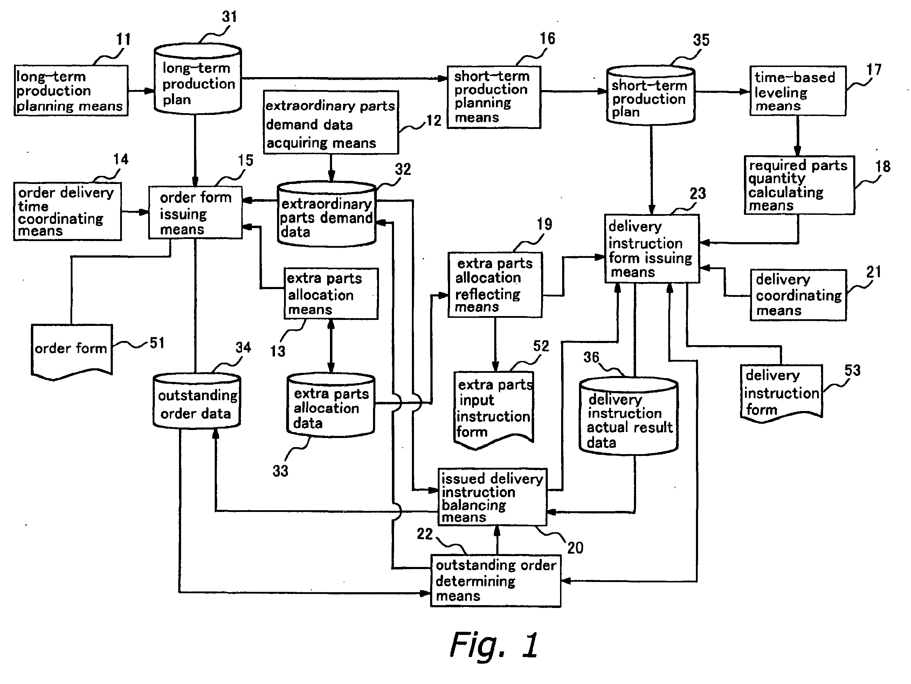

A control block diagram showing an outline of the configuration of the present invention is presented in Fig. 1.

A long-term production planning means 11 sets a predetermined time period and determines a planned production quantity of a product to be produced in the predetermined time period. For example, a production plan is formulated by determining the production quantity on each operating day in a production line in the range of from 6 months up to 1 year. The formulated production plan may be configured such that the plan is reviewed at a given periodic cycle (for example, every week). In the case of reviewing the plan each week, the production plan may be reviewed so that the planned production quantity to be attained for the week after the next is reviewed on the weekend, and if the production line is active on Monday to Friday, the planned production quantities for these 5 days are planned to calculate the total of the planned production quantities. Based on the planned production quantities, the required parts quantity that is necessary for the production is calculated and stored in a database as a long-term production plan data table 31.

An extraordinary parts demand data acquiring means 12 acquires extraordinary parts demand data that are not included in the planned production quantity and stores the acquired extraordinary parts demand data as an extraordinary parts demand data table 32.

An extra parts allocation means 13 carries out the allocation of extra parts in stock based on the required parts quantity in the long-term period and stores the allocation data in an extra parts allocation data table 33 in the database.

An order delivery time coordinating means 14 adjusts an order quantity according to production lots of parts, packaging styles of parts, delivery cycles of suppliers, and the like. For example, when fractions are created in the number of packages if a delivery is carried out according to a calculated order quantity, the order quantity is rounded up for the parts that are usable in a later long-term period, or the order quantity is adjusted according to the delivery schedule of the supplier.

An order form issuing means 15 calculates an order quantity for required parts based on the content of the long-term production plan data table 31 and the content of the extraordinary parts demand data table 32 and adjusts the order quantity according to the extra parts reserving process carried out by the extra parts allocation means 13 and the order delivery coordination process carried out by the order delivery coordinating means 14 to prepare an order form. When there are a plurality of production lines, a plurality of delivery sites accordingly exist, but if a representative delivery site is assigned and the order form is prepared designating this representative delivery site, the order delivery coordination process is made easy. An order form prepared by the order form issuing means 15 is outputted to an order form output means 51, such as a printer or electronic data interchange (EDI).

The order form issuing means 15 reflects the order parts quantity stated on the order form in an outstanding order quantity data table 34 in the database.

A short-term production planning means 16 calculates the required parts quantity that is necessary according to a long-term production plan stored in the long-term production plan data table 31. Here, production status data concerning the actual progress of a production line are acquired, an actual production quantity are determined according to the data, and a required quantity of necessary parts calculated from the actual production quantity and is stored in a short-term production plan data table 35. The required quantity of parts calculated by the short-term production planning means 16 is calculated based on the deliverable date and time of a supplier assuming that a delivery instruction is issued on the dame day. For example, for a supplier that can deliver three days after the issuance of a delivery instruction, the actual production quantity at or after the delivery time three days after the present date and time is calculated.

A time-based leveling means 17 levels an actual production quantity on a time basis according to the short-term production plan stored in the short term production plan data table 35. A required parts quantity calculating means 18 calculates a required quantity of parts that is needed on a time basis according to the actual production quantity leveled by the time-based leveling means 17.

Thus, a required quantity of parts that become necessary on a time basis is calculated by the time-based leveling means 17 and the required parts quantity calculating means 18, which makes it possible to calculate a required quantity of parts on an hourly basis and to give a delivery instruction in accordance therewith. Based on the required quantity of parts that become necessary on a time basis and a delivery cycle of a supplier, an advance delivery time is determined and the timing at which a delivery instruction form is issued is determined, whereby stock quantities in a production line can be appropriately maintained on a time basis, and stockouts and overstocks eliminated.

An extra parts allocation reflecting means 19 reflects the extra parts allocation data in the extra parts allocation data table 33 on a delivery quantity to be stated on a delivery instruction form and prevents an excessive delivery instruction by reflecting the extra parts allocation data on a delivery quantity when an extra parts allocation process has been carried out in an order form. When extra parts allocation data have been reflected on a delivery data, the extra parts allocation reflecting means 19 calculates a delivery quantity according to the extra parts allocation data, and prepares an extra parts input instruction form, which is outputted to an extra parts input instruction output means 52 comprising a printer or EDI.

An issued delivery instruction balancing means 20 carries out an issued delivery instruction balancing process according to the delivery instruction actual result data stored in a delivery instruction actual result data table 36 in the database and the extraordinary parts demand data stored in the extraordinary parts demand data table 32 and, when there are parts for which the delivery instruction has not been completed, incorporates the data thereof into the present delivery instruction form.

A delivery coordinating means 21 adjusts a delivery quantity to be stated on a delivery instruction form according to the delivery package style for parts delivery and the delivery cycle of a supplier, and for example, when fractions are created in the number of packages if the delivery is carried out according to a calculated order quantity, the order quantity is rounded up for the parts that are usable in a later short-term period. In addition to this, a delivery coordination process, such as adjusting the delivery time by taking holidays into consideration, is carried out.

A delivery instruction form issuing means 23 calculates, according to the actual production quantity stored in the short term production plan data table 35, a delivery parts quantity that has been subjected to the adjustment according to the time-based required parts quantity carried out by the required parts quantity calculating means 18, the extra parts reflecting process carried out by the extra parts allocation reflecting means 19, and the delivery coordination process carried out by the delivery coordinating means 21, in order to issue a delivery instruction form. When there are a plurality of production lines, a plurality of delivery sites correspondingly exist, and delivery instruction forms are prepared and issued for the respective delivery sites. If this is the case, delivery coordination may be carried out for each delivery site so as to adjust the delivery quantity. The delivery instruction form issuing means 23 outputs the content of the prepared delivery instruction form to a delivery instruction form output means 53, such as a printer or an EDI.

In addition, the delivery instruction form issuing means 23 updates the delivery instruction actual result data in the delivery instruction actual result data table 36. The issued delivery instruction balancing means 20 updates outstanding order data in an outstanding order data table 34 according to the updated delivery instruction actual result data in the delivery instruction actual result data table 36.

An outstanding order presence judging means 22 judges the presence or absence of outstanding orders according to the outstanding order data in the outstanding order data table 34. When issuing a delivery instruction form with the delivery instruction form issuing means 23, the outstanding order data in the outstanding order data table 34 is confirmed, and if it is determined that there are no outstanding orders, then it is determined whether an extraordinary ordering process is possible or not. If a delivery time based on an extraordinary ordering is early enough, it is determined that an extraordinary order process is possible, and the data in the extraordinary parts demand data table 32 are updated and an extraordinary order process performed. By this process, the data in the extraordinary parts demand data table 32 are updated and based on this, the issuance of an order form is performed with the order form issuing means 15. It is possible to simultaneously carry out the issuance of a delivery instruction form with the delivery instruction issuing means 23. Also, if a delivery time based on an extraordinary ordering is not early enough, it is determined that an extraordinary order process is not possible, and an adjustment is made, for example, by bringing forward a delivery date to accept a preparation process of delivery instruction forms according to a manual for preparing delivery instruction forms.

*Outline of the Process Flow*

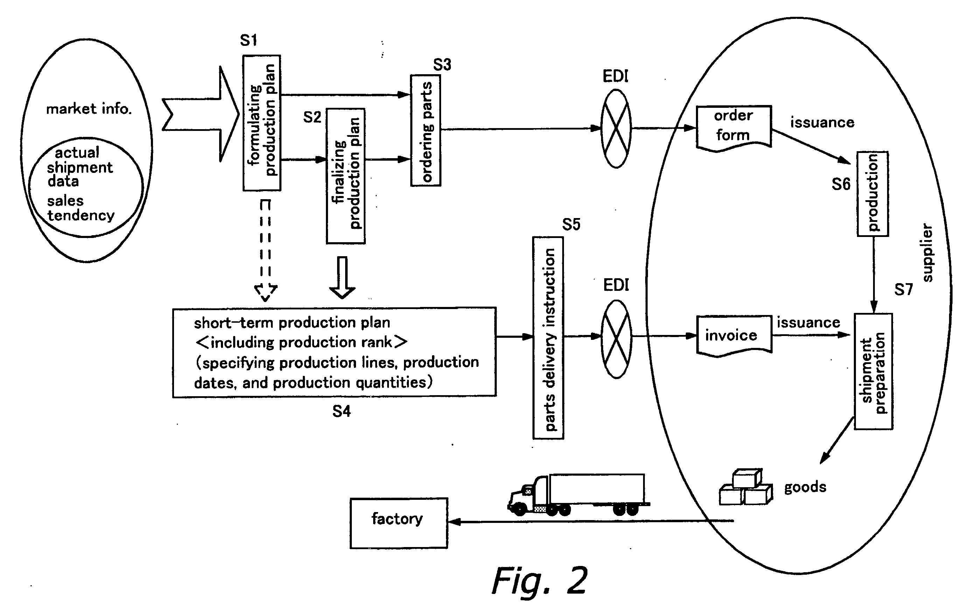

Outline of the process flow is shown in Fig. 2.

In step S1, production plans are formulated taking market information such as actual shipment data and sales tendency into consideration. For example, a case is assumed in which long-term production plans for 6 months to 1 year are formulated and the production plan is reviewed at a given periodic cycle.

In step S2, a production plan is finalized among the formulated production plans. In step S3, parts ordering is carried out according to the finalized production plan. The order form issued here is prepared in the form of electronic data and is transmitted to the parts supplier side by means of electronic data interchange (EDI). The order form made into electronic data can be transmitted via a general internet line network or a dedicated line connecting the ordering side and the supplier. For the parts that require ordering before the production plan is finalized, an order form is prepared and is sent out to the supplier side at the time of the formulating of the production plan. For example, for the parts that require a long procurement lead time, ordering is performed in advance even if the finalization has not yet made.

In step S4, a short-term production plan is formulated according to the finalized production plan. Here, an actual production quantity is calculated for the parts that are subject to an actual delivery instruction according to a production plan, taking the progress of the production line or the like into consideration, and based on this, a delivery quantity of the parts to be stated on the delivery instruction form is determined. Here, the production line, the production date and time, and the production amount are made explicit, and a required parts quantity necessary for the production is calculated to determine a delivery quantity.

In step S5, a delivery instruction form is prepared according to the short-term production plan, and a request for parts delivery is made. This delivery instruction form is transmitted to'the parts supplier side by means of electronic data interchange, for the order form.

On the supplier side, upon receiving the order form data, the order form data are outputted with a printer or are displayed on a computer screen to confirm the order form data. In step S6, the manufacture of the parts is commenced according to the order form data.

In addition, on the supplier side, when receiving the delivery instruction form data, the delivery instruction form data are outputted with a printer or are displayed on a computer screen to confirm the delivery instruction form data. In step S7, delivery preparation is performed according to the data in the delivery instruction form. The prepared parts are delivered to a factory according to the delivery time in the delivery instruction form.

*Control Flow of Parts Ordering*

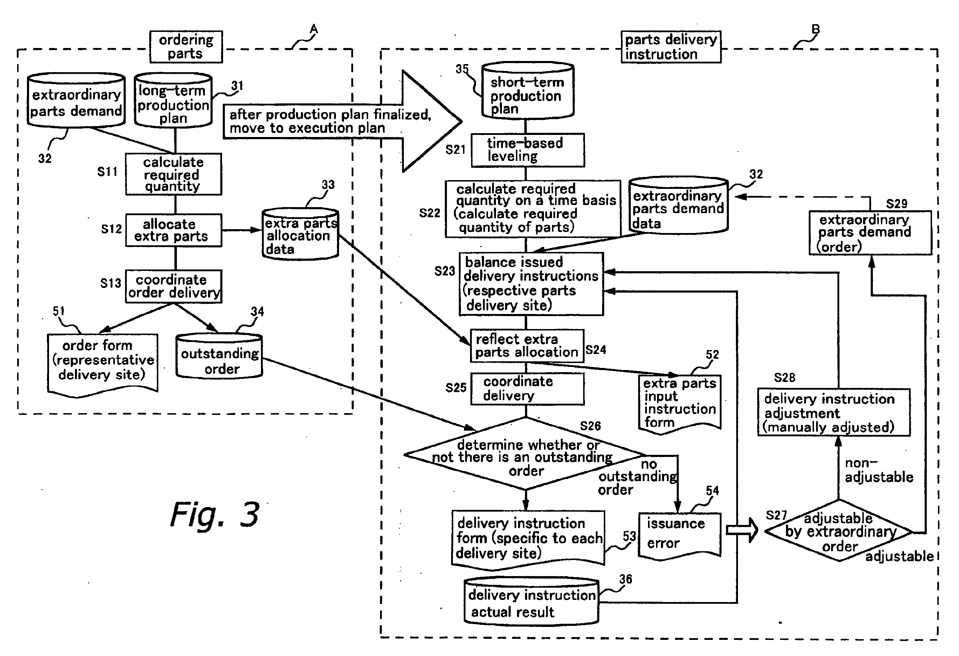

A control flow chart according to one embodiment of the present invention is shown in Fig. 3.

The following is the discussion of the parts ordering process A in Fig. 3.

In step S11, a required parts quantity that becomes necessary during a given time period is calculated according to the long-term production plan data table 31 and the extraordinary parts demand data table 32.

In step S12, an extra parts allocation process is performed based on the calculated required parts quantity and the parts inventory. The allocation data in the case that the extra parts allocation process is carried out are stored in the extra parts allocation data table 33.

In step S13, an order delivery time coordination process is performed. Here, an order quantity is adjusted according to the production lot of the parts, the delivery package style of the parts, the delivery cycle of the supplier, and the like. For example, if the production yield of the supplier side can be increased by performing an order delivery coordination according to the production lot, then fractions are rounded up in correspondence with the production lots for the parts that are usable in a later production. On the other hand, if fractions are created in the number of packages due to the package style in the delivery, the delivery cycle of the supplier, or the like, then the fractions are rounded up for the parts that are usable in a later production so as to correspond to the number of packages. If there are a plurality of delivery sites, the package style is coordinated such that the packages can be easily divided for each delivery site.

After the order delivery coordination process has been performed, the order form output means 51 outputs an order form. At the same time, the content of the outstanding order data table 34 is updated.

Potential candidates for the order system include a procurement lead time-based parts ordering system, an ordering-at-production-plan finalization system, and an extraordinary parts demand system. In the procurement lead time-based parts ordering system, the parts that require long time for the procurement are ordered before the production plan is finalized. In the ordering-at-production-plan-finalization system, ordering is performed when the production plan is finalized. For example, of the production plans formulated in advance, the planned production quantity for the products to be produced the week after the next is reviewed, and according to the reviewed production plan, an order quantity for the parts is determined and ordered. In the extraordinary parts demand system, parts that have not been accounted for in the planned production quantity (custom-made parts and redesigned parts) are ordered, and an order form is prepared according to the content of the extraordinary parts demand data table 32.

When there are a plurality of delivery sites, order delivery coordination is carried out for each delivery site as described above and an order form is issued with an order quantity in which these are totaled. In this case, it is possible that a representative delivery site, which represents the plurality of delivery sites, is assigned and an order form is issued designating this representative delivery site.

*Control Flow of Parts Delivery Instruction*

In step S21, a time-based leveling process is executed according to the short-term production plan data table 35. For example, the production quantity in a time slot in each production line is calculated on an hourly basis. This time-based leveling process may be separately carried out in the morning and in the afternoon in a day, and it is possible to level the production quantity for each production model based on any time unit, such as on a two-hour basis, on an hourly basis, or a 30-minute basis.

In step S22, a required quantity of parts that becomes necessary per a given time is calculated. Here, according to the production quantity leveled on a time basis, a required quantity of parts that becomes necessary for the production thereof is calculated.

In step S23, an issued delivery instruction balancing process is executed. According to the parts quantity determined according to the data in the short-term production plan data table 35, the extraordinary parts demand data in the extraordinary parts demand data table 32, and the delivery instruction actual result data stored in the delivery instruction actual result data table 36, a balancing process is performed if there are parts that have been subjected to delivery instruction. For example, when the previous delivery instruction form includes excessive delivery instructions, the excessive quantity is subtracted from the necessary parts quantity according to the delivery instruction actual result data. This issued delivery instruction balancing process is carried out for each part and for each delivery site.

In step S24, an extra parts allocation reflecting process is executed. When an extra parts allocation process has been executed at the time of the parts ordering, the data in the extra parts allocation data table 33 have already been updated. When the extra parts allocation data table 33 is referred to and it is judged that the extra parts allocation process has been executed, the extra parts allocation data are reflected on the required parts quantity. An extra parts allocation reflecting process can be performed by subtracting the quantity of the extra parts that have been subjected to the extra parts allocation process from the required parts quantity. For the parts that have been subjected to an extra parts allocation process, an extra parts input instruction form is prepared to actually use the extra parts and is dispatched to an applicable section via the extra parts input instruction output means 52.

In step 25, a delivery coordination process is executed. In this delivery coordination process, a delivery quantity to be stated on a delivery instruction form is adjusted according to packaging styles at parts delivery, delivery cycles of suppliers, or the like. For example, when fractions are created in the number of packages if the delivery is carried out according to a calculated order quantity, an order quantity may be determined so that the order quantity is rounded up for the parts that are usable in a later short-term period. In addition to this, a delivery coordination process, such as adjusting a delivery time by taking holidays into consideration, is carried out. In addition, if there is a plurality of delivery sites, delivery coordination is performed for each delivery site to determine a delivery quantity for each delivery site. This makes the issuance of a delivery instruction form for each delivery site possible.

In step 26, it is judged whether or not there is an outstanding order. By referring to the outstanding order data table 34, it is determined whether or not there is an outstanding order during a short-term period. Here, the range of the outstanding orders for each day is taken to be the number for which the delivery instruction is possible, and if there are outstanding orders that match the finally calculated delivery quantity, a delivery instruction form is prepared and is outputted to the delivery instruction form output means 53. This delivery instruction form is issued for each delivery site, such as a production line that actually uses the parts, and is prepared according to the delivery quantity that has been subjected to the delivery coordination for each delivery site as described above. When a delivery instruction form has been prepared, the content of the delivery instruction actual result data table 36 is updated according to the data thereof.

In step S26, if there are no outstanding orders that match the calculated delivery quantity, an issuance error output means 54 performs an output indicating an issuance error. The issuance error output means 54 may be configured such that its output is printed out by a printer or is displayed on a display screen of a computer.

In step S27, regarding delivery instruction data with an issuance error, it is determined whether or not a delivery date based on an extraordinary order is early enough. If it is determined that the delivery date according to an extraordinary order is not early enough, the procedure moves to step S28, whereas if it is determined that the delivery date according to an extraordinary order is early enough, the procedure moves to step S29.

In step S28, a tool for carrying out a delivery instruction adjustment according to a manual is provided, and after such coordination with suppliers as advancing a delivery date to an earlier date, an instruction for preparing a delivery instruction form is accepted. Thereafter, the procedure moves to step S23.

In step S29, an extraordinary parts demand process is executed. Extraordinary parts demand data are generated, the extraordinary parts demand data table 32 is updated, and a delivery instruction form according to an extraordinary parts demand is issued by executing the procedure from step S23 onward.

*Methods of Delivery Instructions*

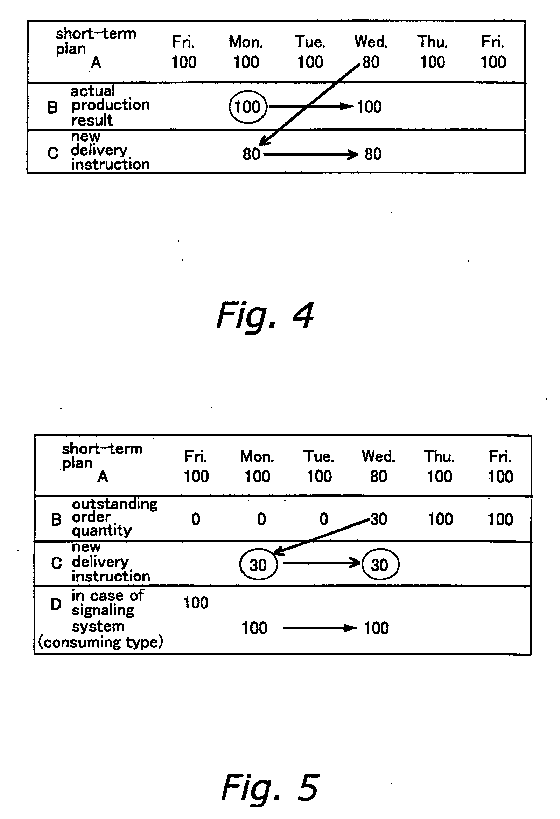

An example of delivery instructions is shown in Fig. 4.

Actual production quantities determined by a short-term plan are shown in row A. Row B shows a case in which delivery instructions are given according to actual production results (in a signal system or a kanban system) and row C shows a case in which a delivery instruction method according to the present invention is adopted. In this example, it is assumed that the supplier performs delivery with two day cycles, in which the time from the issuance of a delivery order form to the delivery is two days.

In the case that a delivery instruction is given according to an actual production result, a parts delivery instruction for 100 products is placed within Monday if the actual production result on Monday is 100 products. Accordingly, a delivery of the parts necessary for the production of 100 products is carried out on Wednesday. Assuming that the actual production quantity on Wednesday in the short-term production plan is 80 products, parts necessary for the production of 20 products remain as excess inventory until the following day. However, the actual production result on Tuesday is 100 products and according to this, a delivery instruction for parts necessary for the production of 100 products is placed within Tuesday, so that parts necessary for the production of 100 products are delivered again on Thursday. Thus, control of the delivery quantity starts from the delivery instruction placed on Wednesday, on which there is a low quantity of the products according to the plan, and the inventory quantity returns to the initial quantity after Friday, on which a delivery is performed according to the delivery instruction placed on Wednesday.

According to a delivery instruction of the present invention, a delivery instruction is placed on Monday for the parts quantity necessary for producing 80 products, which is the planned production quantity on Wednesday according to the short-term production plan, and therefore, the inventory quantity at the time when the production has been finished on Wednesday is the same as the morning inventory quantity.

Referring to Fig. 5, a delivery instruction according to outstanding order data is discussed.

In the case in which production is carried out according to the short-term production plan as shown in row A, delivery instruction forms cannot be issued if there are no outstanding orders (for example, on Friday, delivery instruction forms cannot be issued). For Wednesday, on which the outstanding order quantity is 30, a delivery instruction is given such that parts necessary for producing 30 products are delivered. Thus, delivery instruction forms which state delivery quantities that precede the order quantities in order forms are not issued, and consequently, the risk of stockouts on the suppliers' side is eliminated.

In contrast, in cases in which delivery instructions are made according to actual production results, a delivery instruction is placed for parts necessary for producing 100 products according the actual production result on Monday, and parts for 100 products are delivered on Wednesday, as shown in row D. This is because conventional delivery instruction methods based on actual production results do not have a concept of preparing an order form by calculating an order quantity according to the planned production quantity in a long-term production plan, and therefore, there may be cases in which a delivery instruction is placed so that the delivery time precedes the delivery time at the time of ordering specified in the order form. In such cases, it is possible that the supplier cannot perform delivery on the delivery date specified in the delivery instruction form, and there may even be cases in which stockouts are caused and production activities have to be ceased.

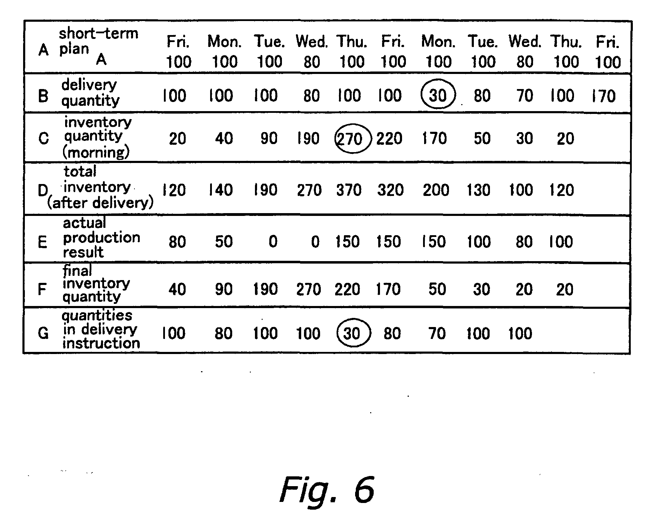

When an actual production result falls below the production plan, the inventory quantity increases, but a delivery instruction control can be carried out according to the increase of the inventory quantity. A case in which such a delivery instruction control is'carried out is shown in Fig. 6. In Fig. 6, row A shows the short-term production plan, row B shows the delivery quantities, row C shows the morning inventory quantities, row D shows the total inventory subsequent to deliveries, row E shows the actual production results, row F shows the final inventory quantities, and row G shows the delivery instruction quantities due after two days.

It can be seen that due to the decrease in the actual production results from Friday to Wednesday, the final inventory quantity on Wednesday and the morning inventory quantity on Thursday increase. In such a case, an algorithm can be implemented such that a morning inventory quantity and a production quantity after two days in the short-term production plan are compared, and according to the result of the comparison, the parts quantity to be delivered after two days is controlled.

For example, in a case in which after a delivery instruction, "production quantity * 2" is set as a maximum parts allocation quantity and a delivery instruction is placed, the delivery instruction quantity can be changed when the morning inventory exceeds "production quantity after two days * 2" according to a short-term production plan. The quantity to be changed in the delivery instruction quantity can be determined according to production quantity after two days, morning inventory quantity, and current day's planned production quantity, for example as follows:

Delivery instruction quantity = (production quantity

after two days * 2) - (morning inventory quantity - current

day's planned actual production quantity)

In an actual example shown in Fig. 6, it can be seen that the delivery instruction quantity on Thursday is controlled to 30 with the goal of reducing the inventory quantity in conjunction with the increase in the actual production results from Thursday to Monday.

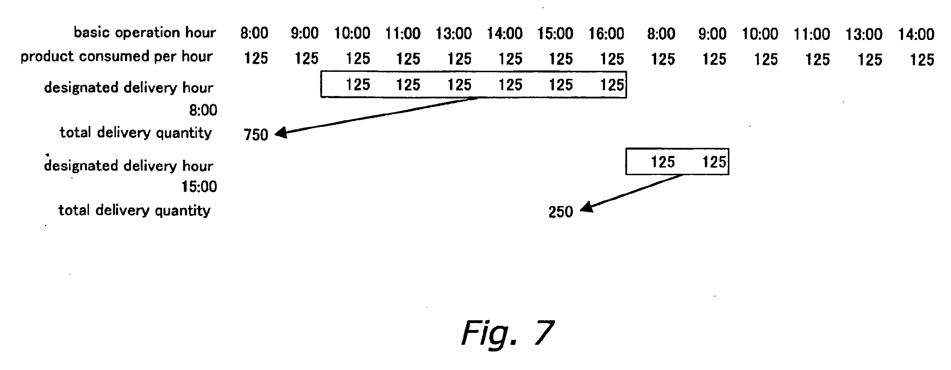

The relationship of delivery quantities to specified delivery hours is shown in Figs. 7 to 10.

A case in which there are two deliveries per day 'is considered.

Fig. 7 shows a configuration in which specified delivery hours for a supplier are 8:00 and 15:00 and deliveries are made 2 hours before the parts are actually put on the production line. In this case, a delivery instruction form is issued such that the required parts quantity required between 10:xx and 16:xx, which is 125*6 = 750, is delivered at 8:00. In addition, a delivery instruction form is issued such that the required parts quantity required between 8 : xx and 9 : xx on the following day, which is 125*2 = 250, is delivered at 15:00.

Accordingly, there is a further precedent delivery portion that has been subject to delivery coordination including the parts to be used from the operation starting hour of the production line until the time at which the production starts to use the parts delivered at 8:00 (8:xx to 9:xx). For this further precedent delivery portion, the parts that are delivered at 15:00 on the preceding day must be used, and this necessitates an inventory control for the parts to be used at the time of starting the operation on the following day.

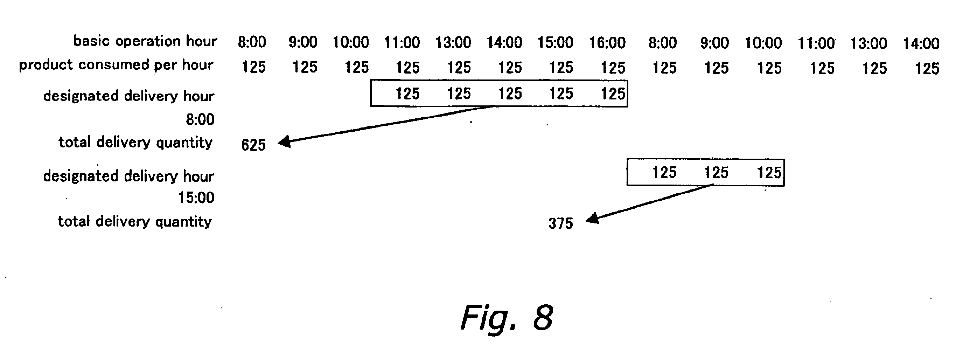

Fig. 8 shows a configuration in which specified delivery hours for a supplier are 8:00 and 15:00 and deliveries are made 3 hours before the parts are actually put on the production line. In this case, a delivery instruction form is issued such that the required parts quantity required between 11:xx and 16:xx, which is 125*5 = 625, is delivered at 8:00. In addition, a delivery instruction form is issued such that the required parts quantity required between 8:xx and 10:xx on the following day, which is 125*3 = 375, is delivered at 15:00.

When this is the case, in a similar fashion as described above, there is a further precedent delivery portion that has been subject to delivery coordination including the parts to be used from the operation starting hour of the production line until the time at which the production starts to use the parts delivered at 8:00 (8:xx to 10:xx). For this further precedent delivery portion, the parts that are delivered at 15:00 on the preceding day must be used, and this necessitates an inventory control for the parts to be used at the time of starting the operation on the following day.

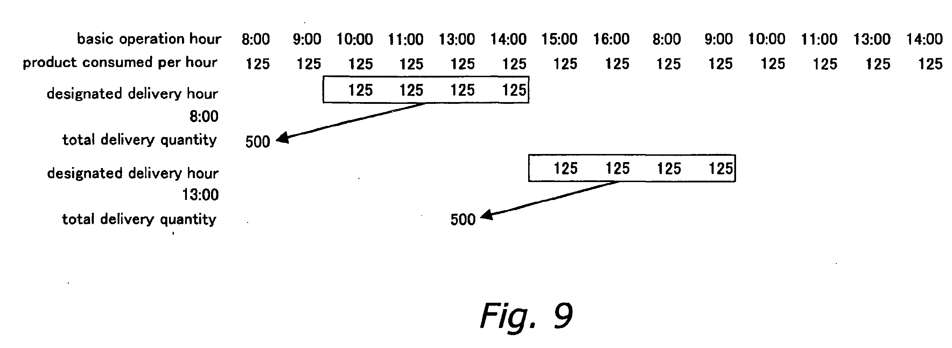

In both examples shown in Figs. 7 and 8, the delivery quantities of the two deliveries are not equalized, and this can lead to a risk of complicating the checking of delivery quantities or the transfer operation on the supplier side. If deliveries are made two hours before the time at which the parts are actually put on the production line as in the example of Fig. 7 but the delivery hours are made 8:00 and 13:00 as shown in Fig. 9, delivery quantities in the two deliveries are equalized.

If this is the case, both the parts quantities to be delivered at 8:00 and 13:00 can be made 125*4 = 500. Thus, the inventory quantity during the operation hours is reduced.

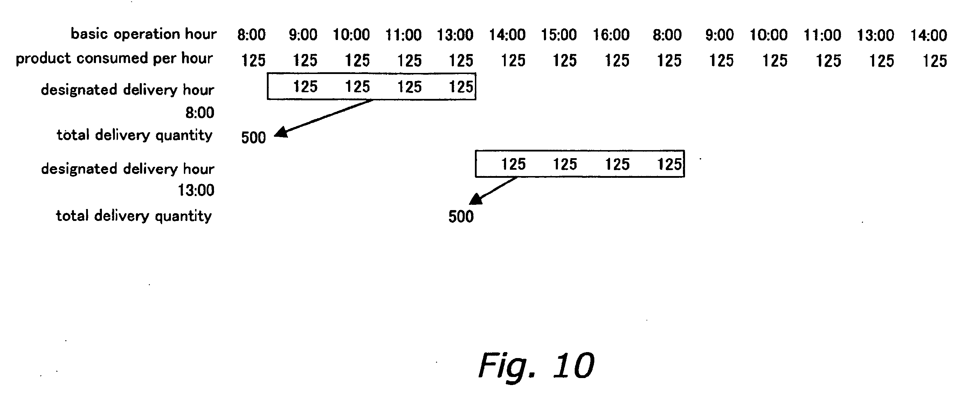

Fig. 10 shows a configuration in which specified delivery hours for a supplier are 8:00 and 13:00 and deliveries are made 1 hour before the parts are actually put on the production line. In this case, a delivery instruction form is issued such that the required parts quantity required between 9:xx and 13:xx, which is 125*4 = 500, is delivered at 8:00. In addition, a delivery instruction form is issued such that the required parts quantity required between 14:xx on the current day and 8:xx on the following day, which is125*4 = 500, is delivered at 13:00.

Thus, delivery instructions can be performed in such a manner that the inventory quantities during operation hours are minimized, and the parts inventory to be used at the time of starting the operation on the following day can be reduced.

Such preceding delivery hours may be adjusted on a 30-minute basis, and by adjusting preceding delivery hours, minimum inventory quantities can be appropriately adjusted.

Industrial Applicability

In the method for procuring parts as set forth in claim 1 of the invention, the order quantity calculated according to the planned production quantity during a predetermined time period is notified to a supplier with an order form, and therefore, the supplier side can prepare parts delivery according to the planned production quantity during the predetermined time period. Moreover, an actual production quantity is determined according to the actual progress status of the production line, and according to this, a delivery instruction form is prepared, thus preventing stockouts as well as overstocks of delivered parts. Furthermore, the cycles at which production plans are reviewed can be changed and flexible production plans in a production line are possible, and even if production plans are changed at short periodic cycles, minimum inventory quantities are ensured by issuing delivery instruction forms according to actual production quantities.

In the method for procuring parts as set forth in claim 2 of the invention, an excessive inventory is prevented by preparing an order form taking an excessive parts quantity into consideration.

In the method for procuring parts as set forth in claim 3 of the invention, when calculated order quantities may cause fractions in production due to production lots of parts or fractions in delivery due to delivery package styles or delivery cycles, coordination is performed to eliminate such fractions, and production efficiency and delivery efficiency are thereby increased.

In the method for procuring parts as set forth in claim 4 of the invention, when a representative delivery site when issuing an order form facilitates order coordination during the predetermined time period even if the final delivery sites have not been determined or final delivery sites are not identical.

In the method for procuring parts as set forth in claim 5 of the invention, when an excessive parts allocation is carried out, a delivery instruction form in which the allocation process is reflected is prepared, and therefore, no excessive delivery instructions are given and appropriate inventory quantities are maintained. Moreover, by preparing an excessive parts inputting instruction form for carrying out a production using excessive parts, the excessive inventory in the production site is eliminated.

In the method for procuring parts as set forth in claim 6 of the invention, when a calculated delivery quantity causes fractions in the delivery, the fractions are rounded up for the parts that are usable later, so that the efficiency of delivery is improved.

In the method for procuring parts as set forth in claim 7 of the invention, a delivery instruction form is issued designating a delivery site to where the parts are actually delivered, and therefore, delivery coordination can be performed for each delivery site, flexible changes, such as production line shifts after the order become possible, and the distribution efficiency within the plant can be improved.

In the method for procuring parts as set forth in claim 8 of the invention, a production plan on a time-by-time basis can be formulated, and the timing of the issuance of the delivery instruction form can be determined according to the production plan on a time-by-time basis.

In the method for procuring parts as set forth in claim 9 of the invention, the inventory quantity of the parts used in a production line can be appropriately maintained on a time-by-time basis.

In the method for procuring parts as set forth in claim 10 of the invention, suppliers prepare for parts procurement based on the order quantities stated on order forms, and therefore, when a delivery instruction form specifying a delivery quantity exceeding the order quantity stated on an order form is issued, there is a risk that parts are not supplied within the delivery time specified in the delivery instruction form. If this is the case, the production activities may have to be suspended due to a shortage of parts supply. In view of this, by controlling the delivery quantity in the delivery instruction form, such a situation is prevented and the efficiency of the production activities is improved.

In the method for procuring parts as set forth in claim 11 of the invention, when a demand for parts that is not accounted for in the planned production quantity arises, a delivery instruction form can be issued based on such extraordinary parts demand data letting the supplier perform a delivery.

In the program as set forth in claim 12 of the invention, the order quantity calculated according to the planned production quantity during a predetermined time period is notified to a supplier with an order form, and therefore, the supplier side can prepare parts delivery according to the planned production quantity during the predetermined time period. Moreover, an actual production quantity is determined according to the actual progress status of the production line, and according to this, a delivery instruction form is prepared, thus preventing stockouts as well as overstocks of delivered parts. Furthermore, the cycles at which production plans are reviewed can be changed and flexible production plans in a production line are possible, and even if production plans are changed at short periodic cycles, minimum inventory quantities are ensured by issuing delivery instruction forms according to actual production quantities.

In the program as set forth in claim 13 of the invention, an excessive inventory is prevented by preparing an order form taking an excessive parts quantity into consideration.

In the program as set forth in claim 14 of the invention, when calculated order quantities may cause fractions in production due to production lots of parts or fractions in delivery due to delivery package styles or delivery cycles, coordination is performed to eliminate such fractions, and production efficiency and delivery efficiency are thereby increased.

In the program as set forth in claim 15 of the invention, when a representative delivery site when issuing an order form facilitates order coordination during the predetermined time period even if the final delivery sites have not been determined or final delivery sites are not identical.

In the program as set forth in claim 16 of the invention, when an excessive parts allocation is carried out, a delivery instruction form in which the allocation process is reflected is prepared, and therefore, no excessive delivery instructions are given and appropriate inventory quantities are maintained. Moreover, by preparing an excessive parts inputting instruction form for carrying out a production using excessive parts, the excessive inventory in the production site is eliminated.

In the program as set forth in claim 17 of the invention, when a calculated delivery quantity causes fractions in the delivery, the fractions are rounded up for the parts that are usable later, so that the efficiency in delivery is improved.

In the program as set forth in claim 18 of the invention, a delivery instruction form is issued designating a delivery site to where the parts are actually delivered, and therefore, delivery coordination can be performed for each delivery site, flexible changes, such as production line shifts after the order become possible, and the distribution efficiency within the plant can be improved.

In the program as set forth in claim 19 of the invention, a production plan on a time-by-time basis can be formulated, and the timing of the issuance of the delivery instruction form can be determined according to the production plan on a time-by-time basis.

In the program as set forth in claim 20 of the invention, the inventory quantity of the parts used in a production line can be appropriately maintained on a time-by-time basis.

In the program as set forth in claim 21 of the invention, by controlling a delivery quantity on a delivery instruction form prevents, such situations that production activities have to be suspended due to a shortage of parts supply are prevented, appropriate inventory quantities are maintained, and the efficiency of the production activities is improved.

In the program as set forth in claim 22 of the invention, when a demand for parts that is not accounted for in the planned production quantity arises, a delivery instruction form can be issued based on such extraordinary parts demand data letting the supplier perform a delivery.

In the storage medium as set forth in claim 23 of the invention, each of the computer-executable programs for executing a parts procurement method can be made into a package and be distributed.

In the parts procurement apparatus as set forth in claim 24 of the invention, the order quantity calculated according to the planned production quantity during a predetermined time period is notified to a supplier with an order form, and therefore, the supplier side can prepare parts delivery according to the planned production quantity during the predetermined time period. Moreover, an actual production quantity is determined according to the actual progress status of the production line, and according to this, a delivery instruction form is prepared, thus preventing stockouts as well as overstocks of delivered parts. Furthermore, the cycles at which production plans are reviewed can be changed and flexible production plans in a production line are possible, and even if production plans are changed at short periodic cycles, minimum inventory quantities are ensured by issuing delivery instruction forms according to actual production quantities.

In the parts procurement apparatus as set forth in claim 25 of the invention, an excessive inventory is prevented by preparing an order form taking an excessive parts quantity into consideration.

In the parts procurement apparatus as set forth in claim 26 of the invention, when calculated order quantities may cause fractions in production due to production lots of parts or fractions in delivery due to delivery package styles or delivery cycles, coordination is performed to eliminate such fractions, and production efficiency and delivery efficiency are thereby increased.

In the parts procurement apparatus as set forth in claim 27 of the invention, when a representative delivery site when issuing an order form facilitates order coordination during the predetermined time period even if the final delivery sites have not been determined or final delivery sites are not identical.

In the parts procurement apparatus as set forth in claim 28 of the invention, when an excessive parts allocation is carried out, a delivery instruction form in which the allocation process is reflected is prepared, and therefore, no excessive delivery instructions are given and appropriate inventory quantities are maintained. Moreover, by preparing an excessive parts inputting instruction form for carrying out a production using excessive parts, the excessive inventory in the production site is eliminated.

In the parts procurement apparatus as set forth in claim 29 of the invention, when a calculated delivery quantity causes fractions in the delivery, the fractions are rounded up for the parts that are usable later, so that the efficiency in delivery is improved.

In the parts procurement apparatus as set forth in claim 30 of the invention, a delivery instruction form is issued designating a delivery site to where the parts are actually delivered, and therefore, delivery coordination can be performed for each delivery site, flexible changes, such as production line shifts after the order become possible, and the distribution efficiency within the plant can be improved.

In the parts procurement apparatus as set forth in claim 31 of the invention, a production plan on a time-by-time basis can be formulated, and the timing of the issuance of the delivery instruction form can be determined according to the production plan on a time-by-time basis.

In the parts procurement apparatus as set forth in claim 32 of the invention, the inventory quantity of the parts used in a production line can be appropriately maintained on a time-by-time basis.

In the parts procurement apparatus as set forth in claim 33 of the invention, by controlling a delivery quantity in a delivery instruction form, such a situation is avoided that production activities have to be suspended by a shortage of parts supply, and the efficiency of the production activities is improved.

In the parts procurement apparatus as set forth in claim 34 of the invention, when a demand for parts that is not accounted for in the planned production quantity arises, a delivery instruction form can be issued based on such extraordinary parts demand data letting the supplier perform a delivery.

**Claims**

1.  A method for procuring parts comprising:

    a step of determining a planned production quantity of a product produced during a predetermined time period;
    a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier;
    a step of determining an actual production quantity of the product produced during the predetermined time period taking a current production progress status into consideration; and
    a step of issuing a delivery instruction form comprising a delivery quantity obtained by calculating from the actual production quantity a parts quantity to be delivered during the predetermined time period, and sending the delivery instruction form to the supplier.

2.  The method for procuring parts as set forth in claim 1, further comprising, when preparing the order form, a step of calculating an order quantity by allocating an excessive parts quantity in an inventory from the required parts quantity calculated from the planned production quantity.

3.  The method for procuring parts as set forth in claim 1 or 2, further comprising a step of adjusting the order quantity in the order form according to such factors as production lots of parts, packaging styles of parts, and delivery cycles.

4.  The method for procuring parts as set forth in any one of claims 1 to 3, wherein a representative delivery site representing a plurality of delivery sites is set and the order form is prepared designating the representative delivery site.

5.  The method for procuring parts as set forth in claim 2, further comprising, when preparing the order form, a step of reflecting the excessive parts quantity allocated from the inventory on the delivery instruction form.

6.  The method for procuring parts as set forth in any one of claims 1 to 5, further comprising a step of adjusting the delivery quantity in the delivery instruction form according to such factors as packaging styles of parts and delivery cycles.

7.  The method for procuring parts as set forth in claim 6, wherein the delivery quantity is adjusted for each delivery site and delivery instruction forms designating corresponding delivery sites are issued.

8.  The method for procuring parts as set forth in claim 7, further comprising:

    a step of leveling the actual production quantity on a time basis; and
    a step of calculating a time-based required parts quantity required on a time-by-time basis from the leveled actual production quantity.

9.  The method for procuring parts as set forth in claim 8, wherein a precedent delivery time is determined from the time-based required parts quantity and a delivery cycle, and the delivery quantity in the delivery instruction form and the timing of issuance of the delivery instruction form are adjusted based on the precedent delivery time.

10. The method for procuring parts as set forth in any one of claims 1 to 9, further comprising a step of controlling the delivery quantity in the delivery instruction form so that the delivery quantity in the delivery instruction form does not precede the order quantity in the order form.

11. The method for procuring parts as set forth in any one of claims 1 to 10, further comprising the steps of:

acquiring an extraordinary parts demand data that is not included in the planned production quantity; and based on the extraordinary parts demand data, issuing a delivery instruction form for an extraordinary order and sending the delivery instruction form to a supplier.

**12.** A computer-executable program for executing a parts procurement method for procuring parts required for producing a product, the method comprising:

a step of determining a planned production quantity of a product produced during a predetermined time period; a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier;

a step of determining an actual production quantity of the product produced during the predetermined time period taking a current production progress status into consideration; and

a step of issuing a delivery instruction form comprising a delivery quantity obtained by calculating from the actual production quantity a parts quantity to be delivered during the predetermined time period, and sending the delivery instruction form to the supplier.

**13.** A computer-executable program for executing a parts procurement method for procuring parts required for producing a product, the method comprising:

a step of determining a planned production quantity of a product produced during a predetermined time period; a step of calculating a required parts quantity required during the predetermined time period from the planned production quantity;

a step of calculating an order quantity by allocating an excessive parts quantity in an inventory from the required parts quantity calculated from the planned production quantity;

a step of preparing an order form according the order quantity and sending it to a supplier;

a step of determining an actual production quantity of the product produced during the predetermined time period taking a current production progress status into consideration; and

a step of issuing a delivery instruction form comprising a delivery quantity obtained by calculating from the actual production quantity a parts quantity to be delivered during the predetermined time period, and sending the delivery instruction form to the supplier.

**14.** A computer-executable program for executing a parts procurement method for procuring parts required for producing a product, the method comprising:

a step of determining a planned production quantity of a product produced during a predetermined time period; a step of calculating a required parts quantity required during the predetermined time period from the planned production quantity;

a step of calculating an order quantity by adjusting the required parts quantity according to such factors as production lots of parts, packaging styles of parts, and delivery cycles;

a step of preparing an order form according the order quantity and sending it to a supplier;

a step of determining an actual production quantity of the product produced during the predetermined time period taking a current production progress status into consideration; and

a step of issuing a delivery instruction form comprising a delivery quantity obtained by calculating from the actual production quantity a parts quantity to be delivered during the predetermined time period, and sending the delivery instruction form to the supplier.

**15.** The computer executable program for executing a parts procurement method as set forth in claim 14, wherein a representative delivery site representing a plurality of delivery sites is set and the order form is prepared designating the representative delivery site

**16.** A computer-executable program for executing a parts procurement method for procuring parts required for producing a product, the method comprising:

a step of determining a planned production quantity of a product produced during a predetermined time period; a step of calculating a required parts quantity required during the predetermined time period from the planned production quantity;

a step of calculating an order quantity by allocating an excessive parts quantity in an inventory from the required parts quantity calculated from the planned production quantity;

a step of preparing an order form according the order quantity and sending it to a supplier;

a step of determining an actual production quantity of the product produced during the predetermined time period taking a current production progress status into consideration;

a step of calculating from the actual production quantity a parts quantity delivered during the predetermined time period;

a step of determining a delivery quantity by, when preparing the order form, reflecting the excessive parts quantity allocated from the inventory in the parts quantity calculated from the actual production quantity; and

a step of issuing a delivery instruction form according to the delivery quantity and sending the delivery instruction form to the supplier.

17. A computer-executable program for executing a parts procurement method for procuring parts required for producing a product, the method comprising:

a step of determining a planned production quantity of a product produced during a predetermined time period;

a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier;

a step of determining an actual production quantity of the product produced during the predetermined time period taking a current production progress status into consideration;

a step of calculating from the actual production quantity a parts quantity delivered during the predetermined time period;

a step of determining a delivery quantity by subjecting the parts quantity calculated from the actual production quantity to a delivery coordination according to such factors as packaging styles of parts and delivery cycles; and

a step of issuing a delivery instruction form according to the delivery quantity and sending the delivery instruction form to the supplier.

18. A computer-executable program for executing a parts procurement method for procuring parts required for producing a product, the method comprising:

a step of determining a planned production quantity of a product produced during a predetermined time period;

a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier;

a step of determining an actual production quantity of the product produced during the predetermined time period taking a current production progress status into consideration;

a step of calculating from the actual production quantity a parts quantity delivered during the predetermined time period; and

a step of issuing a delivery instruction form designating a corresponding delivery site by subjecting the parts quantity calculated from the actual production quantity to a delivery coordination for each delivery site to calculate a delivery quantity, and sending the delivery instruction form to the supplier.

19. A computer-executable program for executing a parts procurement method for procuring parts required for producing a product, the method comprising:

a step of determining a planned production quantity of a product produced during a predetermined time period;

a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier;

a step of determining an actual production quantity of the product produced during the predetermined time period taking a current production progress status into consideration;

a step of leveling the actual production quantity on a time basis;

a step of calculating a time-based required parts quantity required on a time-by-time basis from the leveled actual production quantity; and

a step of issuing a delivery instruction form comprising a delivery quantity obtained by calculating from the actual production quantity a parts quantity to be delivered during the predetermined time period, and sending the delivery instruction form to the supplier.

20. The computer executable program for executing a parts procurement method as set forth in claim 19, wherein a precedent delivery time is determined from the time-based required parts quantity and a delivery cycle, and the delivery quantity in the delivery instruction form and the timing of issuance of the delivery instruction form are adjusted based on the precedent delivery time.

21. A computer-executable program for executing a parts procurement method for procuring parts required for producing a product, the method comprising:

a step of determining a planned production quantity of a product produced during a predetermined time period;
a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier;
a step of determining an actual production quantity of the product produced during the predetermined time period taking a current production progress status into consideration;
a step of calculating from the actual production quantity a parts quantity delivered during the predetermined time period; and
a step of issuing a delivery instruction form comprising a delivery quantity determined from the parts quantity calculated according to the actual production quantity so that the delivery quantity is controlled so as not to precede the order quantity in the order form, and sending the delivery instruction form to the supplier.

22. A computer-executable program for executing a parts procurement method for procuring parts required for producing a product, the method comprising:

a step of determining a planned production quantity of a product produced during a predetermined time period;
a step of preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier;
a step of determining an actual production quantity of the product produced during the predetermined time period taking a current production progress status into consideration;
a step of issuing a delivery instruction form comprising a delivery quantity obtained by calculating from the actual production quantity a parts quantity to be delivered during the predetermined time period, and sending the delivery instruction form to the supplier;
a step of acquiring an extraordinary parts demand data that is not included in the planned production quantity; and
a step of based on the extraordinary parts demand data, issuing a delivery instruction form for an extraordinary order and sending the delivery instruction form to a supplier.

23. A computer-readable storage medium, storing a program as set forth in any one of claims 12 to 22.

24. A parts procurement apparatus comprising:

a long-term production planning means for determining a planned production quantity of a product produced during a predetermined time period;
an order form issuing means for preparing an order form, the order form comprising an order quantity obtained by calculating from the planned production quantity a required parts quantity required during the predetermined time period and calculating from the required parts quantity a parts quantity to be delivered during the predetermined time period, and sending the order form to a supplier;
a short-term production planning means for determining an actual production quantity of the product produced during the predetermined time period taking a current production progress status into consideration; and
a delivery instruction form issuing means for issuing a delivery instruction form comprising a delivery quantity obtained by calculating from the actual production quantity a parts quantity to be delivered during the predetermined time period, and sending the delivery instruction form to the supplier.

25. The parts procurement apparatus as set forth in claim 24, further comprising an excessive parts allocation means for calculating an order quantity by allocating an excessive parts quantity in an inventory from the required parts quantity calculated from the planned production quantity.

26. The parts procurement apparatus as set forth in claim 24 or 25, further comprising an order delivery coordinating means for adjusting the order quantity in the order form according to such factors as production lots of parts, packaging styles of parts, and delivery cycles.

27. The parts procurement apparatus as set forth in any one of claims 24 to 26, wherein a representative delivery site representing a plurality of delivery sites is set and the order form is prepared designating the representative delivery site.

28. The parts procurement apparatus as set forth in claim 25, further comprising an excessive parts allocation reflecting means for reflecting the excessive parts quantity allocated from the inventory on the delivery instruction form when preparing the order form.

29. The parts procurement apparatus as set forth in any one of claims 24 to 28, further comprising a delivery coordinating means for adjusting the order quantity in the order form according to such factors as packaging styles of parts and delivery cycles.

30. The parts procurement apparatus as set forth in claim 29, wherein the delivery quantity is adjusted for each delivery site and delivery instruction forms designating corresponding delivery sites are issued.

31. The parts procurement apparatus as set forth in claim 30, further comprising:

    a time-based leveling means for leveling the actual production quantity on a time basis; and
    a required parts quantity calculating means for calculating a time-based required parts quantity required on a time-by-time basis from the leveled actual production quantity.

32. The parts procurement apparatus as set forth in claim 31, wherein a precedent delivery time is determined from the time-based required parts quantity and a delivery cycle, and the delivery quantity in the delivery instruction form and the timing of issuance of the delivery instruction form are adjusted based on the precedent delivery time.

33. The parts procurement apparatus as set forth in any one of claims 24 to 32, further comprising an outstanding order determining means for controlling the delivery quantity in the delivery instruction form so that the delivery quantity in the delivery instruction form does not precede the order quantity in the order form.

34. The parts procurement apparatus as set forth in any one of claims 24 to 33, further comprising:

    an extraordinary parts demand data acquiring means for acquiring an extraordinary parts demand data that is not included in the planned production quantity; and
    an extraordinary parts ordering means for, based on the extraordinary parts demand data, issuing a delivery instruction form for an extraordinary order and sending the delivery instruction form to a supplier.

*Fig. 1*

market info.

actual shipment data

sales tendency

S1 formulating production plan

S2 finalizing production plan

S3 ordering parts

EDI

order form    issuance

S6 production

supplier

S4 short-term production plan <including production rank> (specifying production lines, production dates, and production quantities)

S5 parts delivery instruction

EDI

invoice    issuance

S7 shipment preparation

goods

factory

*Fig. 2*

**Fig. 3**

ordering parts

extraordinary parts demand

long-term production plan  31

32

after production plan finalized, move to execution plan

S11  calculate required quantity

S12  allocate extra parts → extra parts allocation data  33

S13  coordinate order delivery

51  order form (representative delivery site)

outstanding order  34

parts delivery instruction  B

short-term production plan  35

S21  time-based leveling

S22  calculate required quantity on a time basis (calculate required quantity of parts)

extraordinary parts demand data  32

S23  balance issued delivery instructions (respective parts delivery site)

S24  reflect extra parts allocation

extra parts input instruction form  52

S25  coordinate delivery

S26  determine whether or not there is an outstanding order

no outstanding order

delivery instruction form (specific to each delivery site)  53

issuance error  54

delivery instruction actual result  36

S27  adjustable by extraordinary order

adjustable

non-adjustable

S28  delivery instruction adjustment (manually adjusted)

S29  extraordinary parts demand (order)

EP 1 387 231 A1

| short-term plan A | Fri. 100 | Mon. 100 | Tue. 100 | Wed. 80 | Thu. 100 | Fri. 100 |
|---|---|---|---|---|---|---|
| B actual production result | | (100) ———→ | | 100 | | |
| C new delivery instruction | | 80 ————→ | | 80 | | |

## Fig. 4

| short-term plan A | Fri. 100 | Mon. 100 | Tue. 100 | Wed. 80 | Thu. 100 | Fri. 100 |
|---|---|---|---|---|---|---|
| B outstanding order quantity | 0 | 0 | 0 | 30 | 100 | 100 |
| C new delivery instruction | | (30) ————→ | | (30) | | |
| D in case of signaling system (consuming type) | 100 | 100 ————→ | | 100 | | |

## Fig. 5

| | short-term plan A | Fri. 100 | Mon. 100 | Tue. 100 | Wed. 80 | Thu. 100 | Fri. 100 | Mon. 100 | Tue. 100 | Wed. 80 | Thu. 100 | Fri. 100 |
|---|---|---|---|---|---|---|---|---|---|---|---|---|
| A | | | | | | | | | | | | |
| B | delivery quantity | 100 | 100 | 100 | 80 | 100 | 100 | (30) | 80 | 70 | 100 | 170 |
| C | inventory quantity (morning) | 20 | 40 | 90 | 190 | (270) | 220 | 170 | 50 | 30 | 20 | |
| D | total inventory (after delivery) | 120 | 140 | 190 | 270 | 370 | 320 | 200 | 130 | 100 | 120 | |
| E | actual production result | 80 | 50 | 0 | 0 | 150 | 150 | 150 | 100 | 80 | 100 | |
| F | final inventory quantity | 40 | 90 | 190 | 270 | 220 | 170 | 50 | 30 | 20 | 20 | |
| G | quantities in delivery instruction | 100 | 80 | 100 | 100 | (30) | 80 | 70 | 100 | 100 | | |

*Fig. 6*

| basic operation hour | 8:00 | 9:00 | 10:00 | 11:00 | 13:00 | 14:00 | 15:00 | 16:00 | 8:00 | 9:00 | 10:00 | 11:00 | 13:00 | 14:00 |
|---|---|---|---|---|---|---|---|---|---|---|---|---|---|---|
| product consumed per hour | 125 | 125 | 125 | 125 | 125 | 125 | 125 | 125 | 125 | 125 | 125 | 125 | 125 | 125 |
| designated delivery hour 8:00 | | | 125 | 125 | 125 | 125 | 125 | 125 | | | | | | |
| total delivery quantity | 750 | | | | | | | | | | | | | |
| designated delivery hour 15:00 | | | | | | | | | | | 125 | 125 | | |
| total delivery quantity | | | | | | | 250 | | | | | | | |

*Fig. 7*

| basic operation hour | 8:00 | 9:00 | 10:00 | 11:00 | 13:00 | 14:00 | 15:00 | 16:00 | 8:00 | 9:00 | 10:00 | 11:00 | 13:00 | 14:00 |
|---|---|---|---|---|---|---|---|---|---|---|---|---|---|---|
| product consumed per hour | 125 | 125 | 125 | 125 | 125 | 125 | 125 | 125 | 125 | 125 | 125 | 125 | 125 | 125 |
| designated delivery hour 8:00 | | | | 125 | 125 | 125 | 125 | 125 | | | | | | |
| total delivery quantity | 625 | | | | | | | | | | | | | |
| designated delivery hour 15:00 | | | | | | | | | | 125 | 125 | 125 | | |
| total delivery quantity | | | | | | | 375 | | | | | | | |

*Fig. 8*

EP 1 387 231 A1

basic operation hour

product consumed per hour

| 8:00 | 9:00 | 10:00 | 11:00 | 13:00 | 14:00 | 15:00 | 16:00 | 8:00 | 9:00 | 10:00 | 11:00 | 13:00 | 14:00 |
|------|------|-------|-------|-------|-------|-------|-------|------|------|-------|-------|-------|-------|
| 125 | 125 | 125 | 125 | 125 | 125 | 125 | 125 | 125 | 125 | 125 | 125 | 125 | 125 |

designated delivery hour 8:00

| 125 | 125 | 125 |
|-----|-----|-----|

total delivery quantity   500

designated delivery hour 13:00

| 125 | 125 | 125 | 125 |
|-----|-----|-----|-----|

total delivery quantity   500

*Fig. 9*

| basic operation hour | 8:00 | 9:00 | 10:00 | 11:00 | 13:00 | 14:00 | 15:00 | 16:00 | 8:00 | 9:00 | 10:00 | 11:00 | 13:00 | 14:00 |
|---|---|---|---|---|---|---|---|---|---|---|---|---|---|---|
| product consumed per hour | 125 | 125 | 125 | 125 | 125 | 125 | 125 | 125 | 125 | 125 | 125 | 125 | 125 | 125 |
| designated delivery hour 8:00 | | 125 | 125 | 125 | 125 | | | | | | | | | |
| total delivery quantity | 500 | | | | | | | | | | | | | |
| designated delivery hour 13:00 | | | | | | | 125 | 125 | 125 | 125 | | | | |
| total delivery quantity | | | | | | 500 | | | | | | | | |

*Fig. 10*

## INTERNATIONAL SEARCH REPORT

| | International application No. |
|---|---|
| | PCT/JP02/04417 |

| A. CLASSIFICATION OF SUBJECT MATTER |
|---|
| Int.Cl$^7$  G05B19/418 |

According to International Patent Classification (IPC) or to both national classification and IPC

| B. FIELDS SEARCHED |
|---|
| Minimum documentation searched (classification system followed by classification symbols) |
| Int.Cl$^7$  G05B19/418 |

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | Hiroyuki HIRANO, "Zusetsu MRP Yogo 500Sen Anata nimo Seisan Kanri ga Hanasemasu", The Nikkan Kogyo Shinbun, Ltd., 15 May, 1997 (15.05.97), pages 63, 111 to 112, 115, 166 to 167, 189 | 1–34 |
| A | JP 2000-194760 A  (NEC Corp.), 14 July, 2000 (14.07.00), Par. Nos. [0008] to [0022]; Fig. 1 (Family: none) | 12–34 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 June, 2002 (25.06.02) | 09 July, 2002 (09.07.02) |

| Name and mailing address of the ISA/ | Authorized officer |
|---|---|
| Japanese Patent Office | |
| Facsimile No. | Telephone No. |

Form PCT/ISA/210 (second sheet) (July 1998)